# EUROPEAN PATENT SPECIFICATION

(11) **EP 2 480 608 B1**
(45) Date of publication and mention of the grant of the patent: **24.05.2017**
(21) Application number: 10819143.8
(22) Date of filing: 20.09.2010
(51) Int. Cl.: C08L 69/00, C08K 5/52, C08K 5/36, C09K 21/00

(54) **FLAME RETARDANT, OPTICALLY CLEAR THERMOPLASTIC MOLDING COMPOSITION**
FLAMMHEMMENDE UND OPTISCH KLARE THERMOPLASTISCHE FORMMASSE
COMPOSITION DE MOULAGE THERMOPLASTIQUE OPTIQUEMENT TRANSPARENTE ET IGNIFUGE

(30) Priority: 23.09.2009 US 565167
(43) Date of publication of application: 01.08.2012
(73) Proprietor: Covestro LLC, Pittsburgh, PA 15205 (US); Covestro Deutschland AG, 51373 Leverkusen (DE)
(72) Inventor: ROGUNOVA, Marina, Pittsburgh, PA 15241 (US); SUNDERLAND, Nicolas, Venetia, PA 15367 (US); MASON, James, P., McKees Rocks, PA 15136 (US); FRANSSEN, Hans, 47809 Krefeld (DE); KRAUTER, Berit, 51379 Leverkusen (DE)
(74) Representative: Levpat
(86) International application number: PCT/US2010/002559
(87) International publication number: WO 2011/037611

(56) References cited:
- WO-A1-2010/036900
- WO-A2-2010/005486
- JP-A- 2002 194 193
- US-A- 5 204 394
- US-A1- 2009 043 023
- US-A1- 2009 043 023
- US-B1- 6 596 800
- US-B1- 6 740 697

## Description

The invention relates to thermoplastic molding compositions and in particular to optically clear, flame retardant polycarbonate compositions.

Since its introduction to the market in 1962, aromatic polycarbonate has become well known and accepted as a thermoplastic resin suitable for a wide variety of uses including injection molding, extrusion and film formation. The chemistry, synthesis, properties and applications of these polycarbonates are extensively discussed in Chemistry and Physics of Polycarbonates by Schnell, Interscience, 1964 and Polycarbonates by Christopher and Fox, Reinhold, 1962. Although polycarbonates being self-extinguishing have some inherent flame resistance, ever more demanding requirements of flame-resistance have spawned numerous attempts to increase this property. Two general approaches have been followed.

One approach has been to add substantial amounts of halogen, particularly bromine or chlorine, to polycarbonate compositions. The halogen can be carried by polycarbonate polymer chains such as described in U.S. Pat. Nos. 3,751,400 and 3,334,154 or by a monomeric compound as in U.S. Pat. No. 3,382,207. However, the presence of substantial amounts of halogen has been found to be detrimental to the properties of the polycarbonate, and numerous additives such as those found in U.S. Pat. Nos. 3,647,747 and 3,733,295 have been proposed to overcome those detrimental effects.

The second approach has been the use of any of a variety of salts, notably perfluoroalkane sulfonate salts of alkali metal or alkaline earth metal, with and without polytetrafluoroethylene ("PTFE") as a flame retardant for polycarbonate such as disclosed in U.S. Pat. Nos. 3,775,367; 4,469,833; 4,626,563; 4,626,563; and 4,649,168.

Alkali metal salts of sulfonic acids are taught in U.S. Pat. No. 4,469,833 to be flame retardant additives in the context of polycarbonate compositions containing structural units derived from thiodiphenol.

U.S. Pat. No. 4,220,583 discloses flame retardant polycarbonate compositions containing partially fluorinated polyolefin and organic salts of alkali metal or alkaline earth metals. U.S. Pat. No 3,933,734 describes a flame retardant polycarbonate composition containing metal salts of monomeric and/or polymeric aromatic sulfonic acids. U.S. Pat. No. 3,948,851 teaches a flame retardant polycarbonate composition containing metal salts of monomeric and/or polymeric aromatic sulfonesulfonic acids. Flame-retardant, translucent polycarbonate compositions containing partially fluorinated polyolefin, and an organic alkali (or alkaline earth) metal salt are disclosed in U.S. Pat. No. 4,220,583.

Pickett et al. in U.S. Pat. No. 6,607,814, provide substantially solvent-free multilayer articles that are said to have excellent color retention and gloss retention, solvent resistance and recyclability. The articles of Pickett, et al. are made of a substrate layer containing a first material selected from the group consisting of a metal, ceramic, glass, a cellulosic material, a thermoset resin, and a thermoplastic resin, and a resinous coating layer which includes at least one auxiliary color stabilizer additive and an arylate polymer containing ester structural units derived from a resorcinol or alkylresorcinol isophthalate-terephthalate. An intermediate layer may also be present.

U.S. Pat. No. 6,610,409, also issued to Pickett et al., describes multilayer articles which are made of a substrate layer including at least one thermoplastic polymer, thermoset polymer, cellulosic material, glass, or metal, and at least one coating layer. The coating layer is made of at least one stabilizer additive and a thermally stable polymer including resorcinol arylate polyester chain members substantially free of anhydride linkages linking at least two mers of the polymer chain, prepared by an interfacial method according to the steps of: (a) combining at least one resorcinol moiety and at least one catalyst in a mixture of water and at least one organic solvent substantially immiscible with water; and (b) adding to the mixture from (a) at least one dicarboxylic acid dichloride while maintaining the pH between 3 and 8.5 through the presence of an acid acceptor, wherein the total molar amount of acid chloride groups is stoichiometrically deficient relative to the total molar amount of phenolic groups.

Pickett et al., in U.S. Pat. No. 6,689,474, provide compositions made of (a) a thermally stable polymer comprising resorcinol arylate polyester chain members substantially free of anhydride linkages linking at least two mers of the polymer chain, and (b) at least one auxiliary stabilizer additive selected from the group consisting of 2,2'-(1,4-phenylene)bis(4H-3,1-benzoxazin-4-one) and 1,3-bis[(2-cyano-3,3-diphenylacryloyl)oxy]-2,2-bis[[(2-cyano-3,3-diphenyla cryloyl)oxy]methyl]propane. Both multilayer and unitary articles are provided by Pickett et al.

U.S. Pat. No. 6,884,864, issued to Masuki et al., discloses a polycarbonate which can be obtained by a melting method and whose loss angle δ and complex viscosity η* (Pa·s) measured under the conditions of 250°C and an angular velocity of 10 rad/s satisfy the following relation (1): 2,500 ≤Tan δ/(η*)^{-0.87} ≤ 6,000.

Miyamoto et al., in U.S. Pat. No. 7,084,233, provide a branched aromatic polycarbonate which is said to be excellent in hue and in melt characteristics such as melt strength. The invention of Miyamoto et al. provides a branched aromatic polycarbonate having a viscosity-average molecular weight of 16,000 or higher which is obtained by the transesterification method, with the ratio of the weight-average molecular weight (Mw) to number-average molecular weight (Mn) as measured by gel permeation chromatography and calculated for standard polystyrene (Mw/Mn) in the range of from 2.8 to 4.5 and the proportion of the number of moles of all structural units yielded by a rearrangement reaction in the course of melt polymerization reaction to 1 mol of structural units having the framework of an aromatic dihydroxy compound used as a starting material is said to be higher than 0.3 mol % and not higher than 0.95 mol.

U.S. Pat. No. 7,125,920, issued to Negishi et al.,teaches an ultraviolet absorber for synthetic resins composed of a triazine compound represented by the general formula (I) shown below, 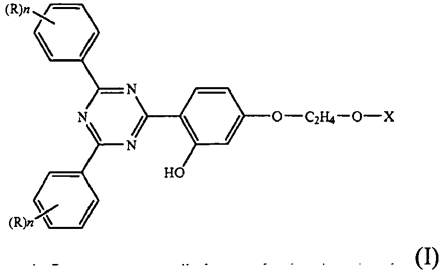 (wherein R represents an alkyl group having 1 to 4 carbon atoms, n is 0 or an integer of up to 2, and X represents a group selected from the consisting of group (a) to (d) shown below), 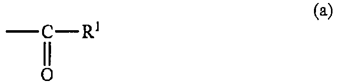 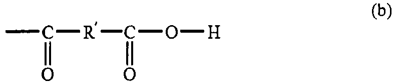 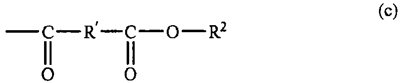 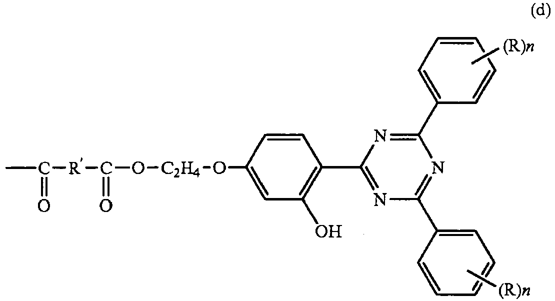 (wherein R¹ represents an aliphatic group having 5 to 60 carbon atoms, which is an alicyclic group, an alkyl group having an alicyclic group at the terminal or in the chain thereof, an alkyl group having a branch, or a linear alkyl group, depending on the number of carbon atoms; R² represents an alkyl group having 1 to 18 carbon atoms or a (poly)alkyleneoxyalkyl group; R' represents an aliphatic diyl group having 5 to 60 carbon atoms; R and n have the same meanings as those described in the general formula (I) above).

Ikeda et al., in U.S. Pat. No. 7,317,067, provide a polycarbonate copolymer said to have excellent heat resistance and dimensional stability and heat resistant parts made from the copolymer are said to be suitable for use in various applications. The polycarbonate copolymer contains 5 to 95 mol % of recurring unit (component a) represented by the general formula (I), 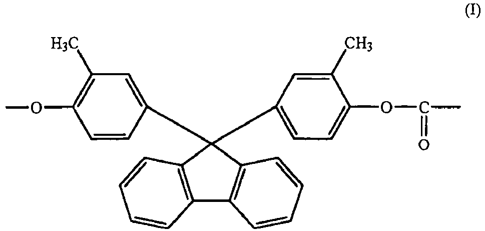 and 95 to 5 mol % of recurring unit (component b) represented by the general formula (II), 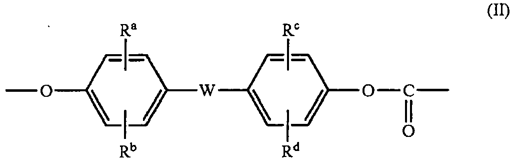 (wherein R^{a} to R^{d} are each independently a hydrogen atom, a hydrocarbon group which may contain an aromatic group having 1 to 9 carbon atoms or a halogen atom, and W is a single bond, a hydrocarbon group which may contain an aromatic group having 1 to 20 carbon atoms or an O, SO, SO₂, CO or COO group).

Those skilled in the art are aware that polycarbonate compositions possessing flame resistance imparted by the incorporation of sulfonate salts of alkali or alkaline earth metals and fluorinated polyolefin often exhibit an undesirable degree of haze, especially in thick molded articles. This deficiency restricts the amount of flame retardant that may be incorporated where optically clear products are desired. Thus, there continues to be a need in the art for flame retardant, optically clear thermoplastic molding compositions.

Accordingly, the present invention provides such a flame-retardant, optically clear thermoplastic molding composition. The composition contains a polycarbonate resin, a bromine-substituted carbonate oligomer, a specific phosphorous containing compound and a specific salt of sulfonic acid, and a phosphite stabilizer in amounts effective to impart to the composition flame resistance, wherein the flame-retardant, optically clear thermoplastic molding composition is free of fluorinated polyolefin. In accordance with UL-94 standard, one embodiment of the flame-retardant, optically clear thermoplastic molding composition is rated 5VA at 3.00 mm and V-0 at 2.3 mm and another embodiment is rated V-0 at 1.5 mm. These and other advantages and benefits of the present invention will be apparent from the Detailed Description of the Invention herein below.

The present invention provides a flame-retardant, optically clear thermoplastic molding as defined in claim 1. The present invention further provides a process for the production of flame-retardant, optically clear thermoplastic molding composition as defined in claim 13.

### Component A

Suitable thermoplastic aromatic polycarbonate resins for preparing the compositions of the present invention are homopolycarbonates and copolycarbonates (including polyestercarbonates), linear or branched resins and mixtures thereof.

These (herein polycarbonates) preferably have a weight average molecular weight of 10,000 to 200,000, more preferably 20,000 to 80,000 (measured by gel permeation chromatography) and their melt flow rate, per ASTM D-1238 at 300°C, is preferably 1 to 65 g/10 minute, more preferably 2 to 15 g/10 min. They may be prepared, for example, by the known diphasic interface process from a carbonic acid derivative such as phosgene and dihydroxy compounds by polycondensation (see German Offenlegungsschriften 2,063,050; 2,063,052; 1,570,703; 2,211,956; 2,211,957 and 2,248,817; French Patent 1,561,518; and the monograph by H. Schnell, Chemistry and Physics of Polycarbonates, Interscience Publishers, New York, N.Y., 1964).

Such polycarbonates are known and widely available in commerce, for example, as products of Bayer MaterialScience under the name, MAKROLON.

Aromatic dihydroxy compounds suitable for the preparation of aromatic polycarbonates and/or aromatic polyester carbonates are represented by formula (I): 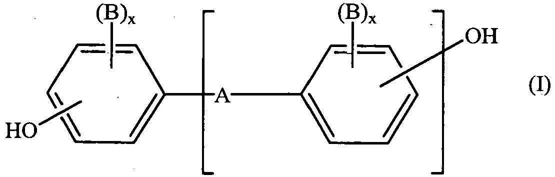 wherein
- A: represents a single bond, C₁-C₅-alkylene, C₂-C₅-alkylidene, C₅-C₆-cycloalkylidene, -O-, -SO-, -CO-, -S-, -SO₂-, C₆-C₁₂-arylene, to which there may be condensed other aromatic rings optionally containing hetero atoms, or a radical conforming to formulae (II) or (III), 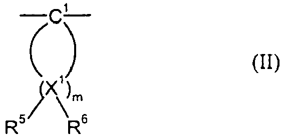 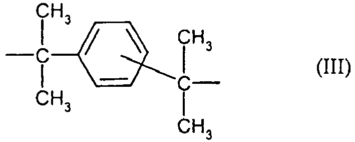
- B: represents independently C₁-C₁₂-alkyl, preferably methyl,
- x: represents independently 0, 1 or 2,
- p: represents 1 or 0, and
- R⁵ and R⁶: are selected individually for each X¹ and each independently denote hydrogen or C₁- to C₆-alkyl, preferably hydrogen, methyl or ethyl,
- X¹: represents carbon, and m represents an integer of 4 to 7, preferably 4 or 5, with the proviso that on at least one atom X¹, R⁵ and R⁶ are both alkyl groups.

Preferred aromatic dihydroxy compounds are hydroquinone, resorcinol, dihydroxydiphenols, bis-(hydroxyphenyl)-C₁-C₅-alkanes, bis-(hydroxyphenyl)-C₅-C₆-cycloalkanes, bis-(hydroxyphenyl) ethers, bis-(hydroxyphenyl) sulfoxides, bis-(hydroxyphenyl) ketones, bis-(hydroxyphenyl)-sulfones and α,α-bis-(hydroxyphenyl)-diisopropylbenzenes. Particularly preferred aromatic dihydroxy compounds are 4,4'-dihydroxydiphenyl, bisphenol A, 2,4-bis-(4-hydroxyphenyl)-2-methylbutane, 1,1-bis-(4-hydroxyphenyl)-cyclohexane, 1,1-bis-(4-hydroxyphenyl)-3,3,5-trimethylcyclohexane, 4,4'-dihydroxydiphenyl sulfide, 4,4'-dihydroxydiphenyl-sulfone. Special preference is given to 2,2-bis-(4-hydroxyphenyl)-propane (bisphenol A). These compounds may be used individually or in the form of any desired mixtures.

Chain terminators suitable for the preparation of polycarbonates include phenol, p-chlorophenol, p-tert.-butylphenol, as well as long-chained alkylphenols, such as 4-(1,3-tetramethylbutyl)-phenol or monoalkylphenols or dialkylphenols having a total of from 8 to 20 carbon atoms in the alkyl substituents, such as 3,5-di-tert.-butylphenol, p-isooctylphenol, p-tert.-octylphenol, p-dodecylphenol and 2-(3,5-dimethylheptyl)-phenol and 4-(3,5-dimethylheptyl)-phenol. The amount of chain terminators to be used is preferably 0.5 to 10% based on the total molar amount of the aromatic dihydroxy compounds used.

The suitable polycarbonates include polyestercarbonates, including such as are disclosed in U.S. Pat. Nos. 4,334,053: 6,566,428 (incorporated herein in their entireties by reference) and in CA 1,173,998. Aromatic dicarboxylic acid dihalides for the preparation of the suitable aromatic polyestercarbonates include diacid dichlorides of isophthalic acid, terephthalic acid, diphenyl ether 4,4'-dicarboxylic acid and naphthalene-2,6-dicarboxylic acid. Particularly preferred in the present invention are mixtures of diacid dichlorides of isophthalic acid and terephthalic acid in a ratio of from 1:20 to 20:1.

The content of carbonate structural units in polyestercarbonates is preferably up to 100 mol.%, especially up to 80 mol.%, particularly preferably up to 50 mol.%, based on the sum of ester groups and carbonate groups. Both the esters and the carbonates contained in the aromatic polyester carbonates may be present in the polycondensation product in the form of blocks or in a randomly distributed manner.

The inventive compositions preferably include 60 to 97, more preferably 70 to 90, most preferably 80 to 85 pbw of a polycarbonate (linear or branched). The polycarbonate may be present in the compositions of the present invention in an amount ranging between any combination of these values, inclusive of the recited values.

### Component B

The bromine substituted oligocarbonate of the invention preferably conforms structurally to formula (IV) below, 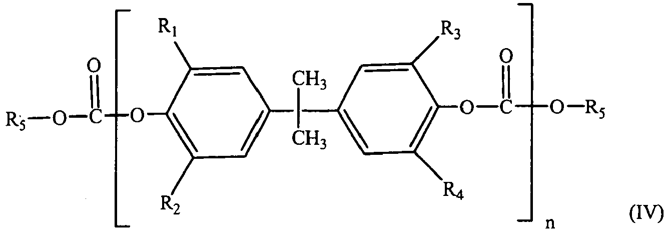 wherein
- R₁, R2, R3 and R₄: independently denote H, Br or CH₃, with the proviso that at least one of R₁, R₂, R₃, R₄ denotes Br,
- R₅: denotes an aryl, alkylaryl or alkyl radicals, preferably, phenyl, p-tert-butylphenyl, cumyl, nonyl or iso-nonyl radicals,
- n: is 1-100, preferably 2 to 50 and more preferably 3 to 5.

Most suitable is the oligocarbonate having bromine content greater than 40 percent, more preferably 50 to 55 percent relative to its weight represented by the formula (IVa),

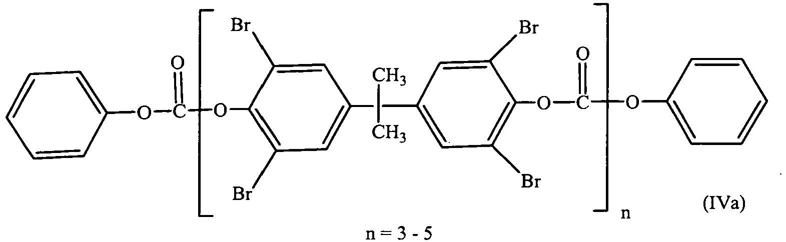

The inventive compositions contain preferably 1 to 20, more preferably 5 to 15, and most preferably 8 to 12 pbw of bromine-substituted oligocarbonate. The bromine-substituted oligocarbonate may be present in the compositions of the present invention in an amount ranging between any combination of these values, inclusive of the recited values.

### Component C

Phosphorus-containing compounds suitable in the present invention include oligomeric organic phosphoric or phosphonic acid esters conforming to formula (V), 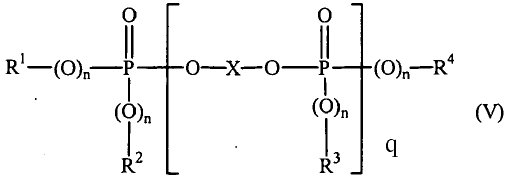 wherein,
- R¹, R², R³ and R⁴: independently represent C₁-C₈-alkyl, or C₅-C₆-cycloalkyl, C₆-C₂₀-aryl or C₇-C₁₂-aralkyl each optionally substituted by alkyl, preferably by C₁-C₄-alkyl,
- n: independently denotes 0 or 1, preferably 1,
- q: denotes 0.5 to 30, preferably 0.8 to 15, more preferably 1 to 5, most preferably 1 to 2, and
- X: is a mono- or poly-nuclear aromatic radical having from 6 to 30 carbon atoms, or an aliphatic radical having from 2 to 30 carbon atoms, which may be OH-substituted and may contain up to 8 ether bonds. The aliphatic radical may be linear or branched.

Preferably, R¹, R², R³ and R⁴ each independently represent C₁-C₄-alkyl, phenyl, naphthyl or phenyl-C₁-C₄-alkyl. In those embodiments where any of R¹, R², R³ and R⁴ is aromatic, it may be substituted by alkyl groups, preferably by C₁-C₄-alkyl. Particularly preferred aryl radicals are cresyl, phenyl, xylenyl, propylphenyl or butylphenyl.

In one embodiment, X represents a mono- or poly-nuclear aromatic radical having from 6 to 30 carbon atoms. It is preferably derived from any of the aromatic dihydroxy compounds of formula (I).
- X: particularly preferably represents at least one member selected from the group consisting of

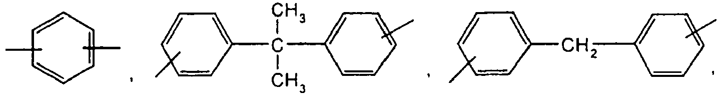

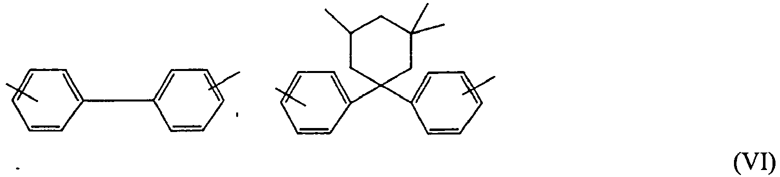

Especially, X may be derived from resorcinol, hydroquinone, bisphenol A or diphenylphenol and particularly preferably from bisphenol A. Further suitable phosphorus-containing compounds are compounds of formula (VIa): 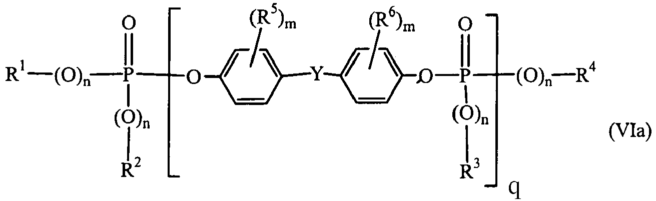 wherein
- R¹, R², R³, R⁴, n and q: are as defined above for formula (VI),
- m: independently represents 0, 1, 2, 3 or 4,
- R⁵ and R⁶: independently represents C₁₋₄-alkyl, preferably methyl or ethyl, and
- Y: represents C₁-C₇-alkylidene, C₁-C₇-alkylene, C₅-C₁₂-cycloalkylene, C₅-C₁₂-cycloalkylidene, -O-, -S-, -SO₂ or -CO-, preferably isopropylidene or methylene.

Particularly preferred is 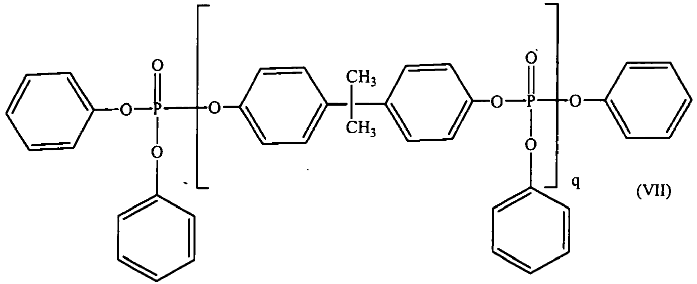 wherein q is 1 to 2.

Such phosphorus compounds are known to those skilled in the art (*See*, e.g., U.S. Pat. Nos. 5,204,394 and 5,672,645) or may be prepared by known methods (e.g. Ullmanns Enzyklopädie der technischen Chemie, Vol. 18, p. 301 et seq. 1979; Houben-Weyl, Methoden der organischen Chemie, Vol. 12/1, p. 43; Beilstein Vol. 6, p. 177).

The inventive compositions preferably contain 1 to 20, more preferably 2 to 10, and most preferably 3 to 7, pbw of a phosphorus-containing compound, preferably organic phosphoric or phosphonic acid ester. The phosphorus-containing compound may be present in the compositions of the present invention in an amount ranging between any combination of these values, inclusive of the recited values.

### Component D

The inorganic salt suitable in the context of the inventive composition is C₁₋₆-alkylammonium, ammonium, alkali or alkaline-earth salt of perfluoroalkane sulfonic acid, sodium diphenylsulfone-sulphonate, potassium diphenylsulfone-sulphonate, or tetraethyl ammonium diphenylsulfone-sulphonate. Examples of such salts include sodium and potassium perfluorobutane sulfonate, sodium and potassium perfluoromethylbutane sulfonate, sodium and potassium perfluorooctane sulfonate, sodium and potassium perfluoromethane sulfonate, sodium and potassium perfluoroethane sulfonate, sodium and potassium perfluoropropane sulfonate, sodium and potassium perfluorohexane sulfonate, sodium and potassium perfluoroheptane sulfonate, tetraethylammonium perfluorobutane sulfonate, tetraethylammonium perfluoromethylbutane sulfonate and the like and mixtures thereof.

Non-limiting examples of suitable sulfonic acid salts are perfluoroalkane sulfonate alkali metal, perfluoroalkane sulfonate alkaline earth metal, C₁₋₆-alkylammonium, or ammonium salts. Such salts are described in the above-mentioned U.S. Pat. No. 3,775,367, and include, for example, salts such as sodium, potassium, or tetraethyl ammonium perfluoromethylbutane sulphonate; sodium, potassium, or tetraethyl ammonium perfluoromethane sulphonate; sodium, potassium, or tetraethyl ammonium perfluoroethane sulphonate; sodium, potassium, or tetraethyl ammonium perfluoropropane sulphonate; sodium, potassium, or tetraethyl ammonium perfluorohexane sulphonate; sodium, potassium, or tetraethyl ammonium perfluoroheptane sulphonate; sodium, potassium, or tetraethyl ammonium perfluoroctanesulphonate; sodium, potassium, or tetraethyl ammonium perfluorobutane sulfonate; and sodium, potassium, or tetraethyl ammonium diphenylsulfone-sulphonate; and mixtures comprising at least one of the foregoing salts. Potassium perfluorobutane sulfonate (KPFBS) and potassium diphenylsulfon-3-sulphonate (KSS) are particularly preferred.

Such sulfonates or mixtures thereof may be added to the polycarbonate during its preparation or they may be added to the melt of the finished polycarbonate by homogenization using an extruder, for example, or by any other suitable means which will insure a thorough distribution in the polycarbonate resin. Some such suitable methods are described, for example, in U.S. Pat. No. 3,509,091. The inventive compositions preferably include 0.01 to 1, more preferably 0.02 to 0.5 pbw of at least one alkali or alkaline-earth salt of perfluoroalkane sulfonic acid. The at least one alkali or alkaline-earth salt of perfluoroalkane sulfonic acid may be present in the compositions of the present invention in an amount ranging between any combination of these values, inclusive of the recited values.

### Component E

Phosphite stabilizers are secondary antioxidants that are known to those skilled in the art and may be represented by the structures listed at pages 109-112 of the Plastic Additives Handbook, 5th Ed. (Hanser Gardner Publications, Inc., Cincinnati, Ohio, USA, 2001). Some common commercially available phosphite stabilizers include: ULTRANOX 626 (GE Specialty Chemicals), IRGAFOS 168 (Ciba Specialty Chemicals), WESTON 619 (GE Specialty Chemicals) and DOVERPHOS S-9228 (Dover Chemicals) solid phosphite antioxidant/stabilizer.

The inventive compositions include 0.01 to 1, more preferably 0.02 to 0.5, most preferably 0.04 to 0.1 pbw of at least one phosphite stabilizer, most preferably (Bis (2,4-dicumylphenyl) pentaerythritol diphosphite. The at least one phosphite stabilizer may be present in the compositions of the present invention in an amount ranging between any combination of these values, inclusive of the recited values.

### Other components

The inventive composition may further include effective amounts of any of the additives known for their function in the context of thermoplastic polycarbonate molding compositions. These include any one or more of lubricants, mold release agents, for example pentaerythritol tetrastearate, nucleating agents, antistatic agents, other antioxidants, thermal stabilizers, light stabilizers, hydrolytic stabilizers, fillers and reinforcing agents, colorants or pigments, as well as further flame retarding agents, other drip suppressants or a flame retarding synergists. The additives may be used in effective amounts, preferably of from 0.01 to a total of 30% relative to the total weight of the polycarbonate component.

The inventive composition may be produced by conventional procedures using conventional equipment. It may be used to produce moldings of any kind by thermoplastic processes such as injection molding, extrusion and blow molding methods. The Examples which follow are illustrative of the invention.

### EXAMPLES

The present invention is further illustrated, but is not to be limited, by the following examples. All quantities given in "parts" and "percents" are understood to be by weight, unless otherwise indicated.

In preparing the compositions shown below the following components were used:
- PC-A: a bisphenol-A based, linear homopolycarbonate having melt flow rate of about 4 g/10min (at 300°C, 1.2 kg) per ASTM D 1238 (MAKROLON 3208, a product of Bayer MaterialScience LLC);
- PC-B: a bisphenol-A based on branched homopolycarbonate having melt flow rate of about 2.5 g/10min (at 300°C, 1.2 kg) per ASTM D 1238(Makrolon WB1239, a product of Bayer MaterialScience LLC);
- Br-OC: tetra-brominated oligocarbonate based on bisphenol-A (BC-52, a product of Chemtura Corporation) conforming to the formula (IVa) below, 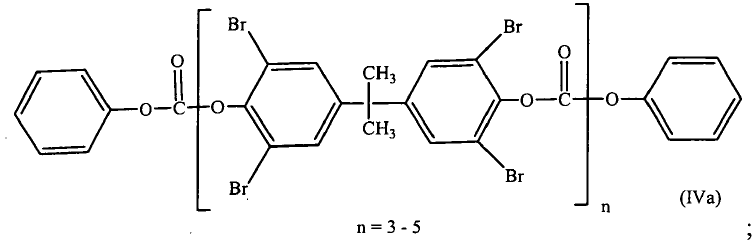
- P-compound A: phosphorous compound (REOFOS BAPP, a product of Great Lakes Chemical) conforming to the formula (VII) below, 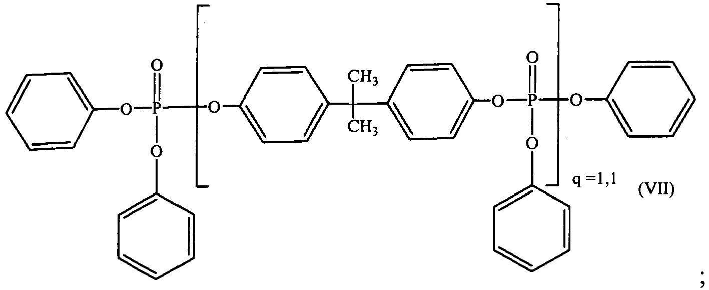
- P Compound B: Triphenyl Phosphine;
- Sulfonate A: potassium perfluorobutane sulfonate, (BAYOWET C4 TP AC 2001, a product of Lanxess AG);
- Sulfonate B: potassium diphenylsulfone sulfonate, (KSS, a product of Arichem LLC);
- Antioxidant A: IRGANOX 1076, a product of Ciba Specialties;
- Antioxidant B: secondary antioxidant (PEP Q, a product of Clariant);
- Antioxidant C: Bis (2,4-dicumylphenyl) pentaerythritol diphosphite (DOVERPHOS S-9228, a product of Dover Chemicals);
- Antioxidant D: IRGAFOS 168, a product of Ciba Specialty Chemicals Corp;
- UV Stabilizer: 2-(2'-hydroxy-5'-t-octylphenyl)benzotriazole (TINUVIN 329 , a product of Ciba Specialties);
- Fluorinated polyolefin: co-precipitated PTFE and SAN (50/50 wt.%).

Each of the exemplified compositions further included about 0.1 wt.% thermal stabilizers and 0.25 wt.% lubricant (GLYCOLUBE P)which are believed to have no criticality in the context of the present invention. In the preparation of exemplified compositions, the components and additives (given in wt.%) were melt compounded in a twin screw extruder ZSK 30 at a temperature profile of 300 to 400°C. The pellets obtained were dried in a forced air convection oven at 120°C for 4 to 6 hours. The test specimens were prepared by injection molding.

The melt flow rates (MFR) of the compositions were determined in accordance with ASTM D-1238 at 300°C, 1.2Kg load. Multi axial Impact strength was determined at room temperature in accordance with ASTM D3763 using specimens 1/8". The flammability rating was determined according to UL-94 on specimens 2.3 mm thick. Flammability rating in accordance with UL94 5V protocol was also performed on plaques measuring 6" x 6" and bars with 3.0 mm thickness. Examples 4, 5 and 7-9 are not according to the invention.

**Table I**

| **Component** | **C1** | **C2** | **C3** | **4** | **5** |
|---|---|---|---|---|---|
| PC-A | 94.4 | 89.4 | 84.4 | 84.4 | - |
| PC-B | - | - | - | - | 84.4 |
| Sulfonate A | 0.05 | 0.05 | 0.05 | 0.05 | 0.05 |
| P-compound A | 5 | 0 | 5 | 5 | 5 |
| Br-OC | 0.0 | 10 | 10 | 10 | 10 |
| Fluorinated polyolefin | 0.25 | 0.25 | 0.25 | 0.0 | 0.0 |

| **Physical Properties** | | | | | |
|---|---|---|---|---|---|
| Melt Flow, cm³/10min. | 8.8 | 6.1 | 9.2 | 9.7 | 7.3 |

| **Optical properties** | | | | | |
|---|---|---|---|---|---|
| Haze,% | 4.43 | 11.3 | 11.7 | 0.79 | 0.69 |
| Transparency, % | 88 | 86.1 | 85.6 | 90.1 | 87.4 |

| **Mechanical Properties** | | | | | |
|---|---|---|---|---|---|
| Multi-axial Impact, ft 1bf | 52.4 | 49.8 | 51.2 | 48.0 | 40.4 |

| **Flammability Rating** | | | | | |
|---|---|---|---|---|---|
| UL94 5V, bars 3mm thickness | Fail | Fail | 5V-A | 5V-A | 5V-A |
| UL94 5V, plaques 3mm thickness | 5V-A | 5V-A | 5V-A | 5V-A | 5V-A |
| UL94-V, 2.3 mm thickness | V-2 | V-0 | V-0 | V-0 | V-0 |
| UL94-V, 1.5 mm thickness | V-2 | V-2 | V-2 | V-2 | V-0 |

Examples C1, C2 and C3 are comparative examples exhibiting inferior properties. Examples 4 and 5 demonstrate a combination of excellent transparency (i.e., haze values <1.0%) and exceptional flame resistance with Example 4 having a combination of 5VA at 3.00 mm and V-0 at 2.3 mm and Example 5 using a branched polycarbonate having a combination of 5VA at 3.00 mm and V-0 at 1.5 mm.

**Table II**

| **Component** | **Ex. C6** | **Ex. 7** | **Ex. 8** | **Ex. 9** |
|---|---|---|---|---|
| PC-A | 84.42 | - | 84.30 | 84.42 |
| PC-B | - | 84.42 | - | - |
| Sulfonate A | 0.05 | 0.05 | - | 0.05 |
| Sulfonate B | - | - | 0.17 | - |
| P-compound A | 5 | 5 | 5 | 5 |
| P-compound B | 0.08 | 0.08 | 0.08 | - |
| Br-OC | 10 | 10 | 10 | 10 |
| UV Stabilizer | 0.2 | 0.2 | 0.2 | 0.2 |
| Antioxidant A | - | - | - | 0.08 |

| **Physical Properties** | | | | |
|---|---|---|---|---|
| Melt Flow, cm³/10min. | 12.8 | 7.3 | 14.62 | 12.38 |

| **Optical properties** | | | | |
|---|---|---|---|---|
| Haze,% | 0.767 | 0.687 | 1.183 | 0.49 |
| Transmittance, % | 88.6 | 87.367 | 86 | 89.1 |

| **Mechanical Properties** | | | | |
|---|---|---|---|---|
| Multi-axial Impact, ft 1bf | 43.92 | 40.42 | 44.4 | 47.26 |

| **Flammability Rating** | | | | |
|---|---|---|---|---|
| UL94 5V, bars 3 mm thickness | 5V-A | 5V-A | 5V-A | 5V-A |
| UL94 5V, plaques 3 mm thickness | 5V-A | 5V-A | 5V-A | 5V-A |
| UL94-V, 2.3 mm thickness | V-0 | V-0 | V-0 | V-0 |
| UL94-V, 2.0 mm thickness | V-0 | V-0 | V-0 | V-0 |
| UL94-V, 1.5 mm thickness | | V-0 | | |

**Table III**

| **Component** | **Ex. 10** | **Ex. 11** | **Ex. 12** | **Ex. 13** |
|---|---|---|---|---|
| PC-A | 84.1 | 82.6 | 81.1 | 79.1 |
| Sulfonate B | 0.4 | 0.4 | 0.4 | 0.4 |
| P-compound A | 5 | 6.5 | 8 | 10 |
| Antioxidant C | 0.08 | 0.08 | 0.08 | 0.08 |
| Br-OC | 10 | 10 | 10 | 10 |
| UV Stabilizer | 0.15 | 0.15 | 0.15 | 0.15 |

| **Physical Properties** | | | | |
|---|---|---|---|---|
| Melt Flow, cm³/10min. | 13 | 15 | 20 | 20 |

| **Optical properties** | | | | |
|---|---|---|---|---|
| Haze,% | 1.5 | 1.3 | 1.6 | 1.1 |
| Transmittance, % | 89.9 | 90.1 | 90.0 | 90.4 |

| Mechanical Properties | | | | |
|---|---|---|---|---|
| Multi-axial Impact, ft lbf | 47 | 49 | 40 | 47 |

| **Flammability Rating** | | | | |
|---|---|---|---|---|
| UL94-V, 1.5 mm thickness | V-2 | V-2 | V-0 | V-0 |

As can be appreciated by reference to Table III, Examples 12 and 13 demonstrate good transparency (about 1 % haze) and exceptional flame resistance of V-0 at 1.5 mm.

**Table IV**

| **Component** | **Ex. C14** | **Ex. C15** | **Ex. C16** | **Ex. 17** | **Ex. 18** |
|---|---|---|---|---|---|
| PC-A | 84.47 | 84.4 | 84.5 | 84.45 | 84.47 |
| Sulfonate A | 0.05 | 0.05 | 0.05 | 0.05 | 0.05 |
| P-compound A | 5 | 5 | 5 | 5 | 5 |
| P-compound B | 0.08 | - | - | - | - |
| Br-OC | 10 | 10 | 10 | 10 | 10 |
| Antioxidant-A | - | - | 0.01 | 0.02 | - |
| Antioxidant-B | - | 0.08 | 0.04 | - | - |
| Antioxidant C | - | - | - | - | 0.08 |
| Antioxidant D | - | - | - | 0.08 | - |

| **Physical Properties** | | | | | |
|---|---|---|---|---|---|
| Melt Flow, cm³/10min. | 11 | 11 | 10.5 | 12.4 | 12.4 |

| **Optical properties** | | | | | |
|---|---|---|---|---|---|
| Haze,% | | | | | |
| Transmittance, % | 87.7 | 88.7 | 88.7 | 87.5 | 89.4 |

| **Mechanical Properties** | | | | | |
|---|---|---|---|---|---|
| Multi-axial Impact, ft lbf | 49 | 50 | 51 | 53 | 50 |

| **Flammability Rating** | | | | | |
|---|---|---|---|---|---|
| UL94 5V, bars 3 mm thickness | 5V-A | 5V-A | 5V-A | 5V-A | 5V-A |
| UL94 5V, plaques 3 mm thickness | 5V-A | 5V-A | 5V-A | 5V-A | 5V-A |
| UL94-V, 2.3 mm thickness | V-0 | V-0 | V-0 | V-0 | V-0 |

| **yellowness index** | | | | | |
|---|---|---|---|---|---|
| 550°F | 2.93 | 2.96 | 3.72 | 3.81 | 3.06 |
| 575.00 | 2.95 | 2.99 | 3.80 | 4.02 | 3.11 |
| 600.00 | 2.98 | 3.04 | 3.96 | 4.43 | 3.25 |
| 625.00 | 3.47 | 3.15 | 3.91 | 4.51 | 3.28 |
| 650.00 | 9.53 | 3.90 | 4.87 | 5.17 | 3.80 |
| 675.00 | 19.46 | 12.41 | 10.84 | 8.49 | 7.32 |

Examples C14, C 15 and C16 are comparative examples exhibiting inferior properties. Example 18, which is representative of the present invention, shows a combination of exceptional flame resistance (combination of 5VA at 3.00 mm and V0 at 2.3 mm) and transparency (with haze value <1.0%), and the lowest yellowness index.

## Claims

1. A flame-retardant, optically clear thermoplastic molding composition comprising:
A) 60 to 97 pbw of an aromatic polycarbonate;
B) 1 to 20 pbw of bromine-substituted oligocarbonate;
C) 1 to 20 pbw of a phosphorus-containing compound; wherein the phosphorus-containing compound conforms structurally to formula (V), 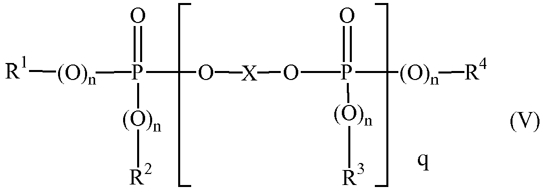 wherein
R¹, R², R³ and R⁴ independently represents C₁-C₈-alkyl, or C₅-C₆-cycloalkyl, C₆-C₂₀-aryl or C₇-C₁₂-aralkyl,
n independently denotes 0 or 1,
q denotes 0.5 to 30, and
X is a mono- or poly-nuclear aromatic radical having from 6 to 30 carbon atoms, or an aliphatic radical having from 2 to 30 carbon atoms;
D) 0.01 to 1 pbw of at least one C₁₋₆-alkylammonium, ammonium, alkali or alkaline-earth salt ofperfluoroalkane sulfonic acid or sodium diphenylsulfone-sulphonate, potassium diphenylsulfone-sulphonate, or tetraethyl ammonium diphenylsulfone-sulphonate; and
E) 0.01 to 1 pbw of a phosphite antioxidant/stabilizer,
wherein the flame-retardant, optically clear thermoplastic molding composition is free of fluorinated polyolefin, shows haze values <1.0% and is rated 5VA at 3.00 mm and V-0 at 1.5 mm according to UL-94.

2. The flame-retardant, optically clear thermoplastic molding composition according to Claim 1, wherein the polycarbonate is present in an amount of 80 pbw to 85 pbw.

3. The flame-retardant, optically clear thermoplastic molding composition according to Claim 1, wherein the bromine-substituted oligocarbonate is present in an amount of 8 pbw to 12 pbw.

4. The flame-retardant, optically clear thermoplastic molding composition according to Claim 1, wherein said bromine-substituted oligocarbonate conforms structurally to formula (IV), 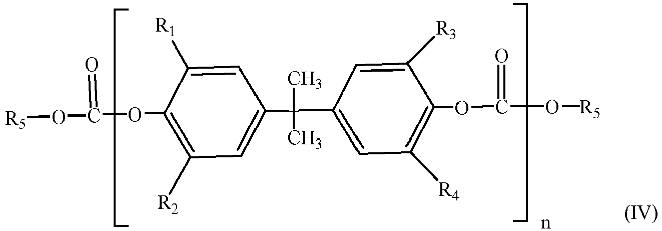 where R₁ ,R₂ ,R₃ and R₄ independently denote H, Br or CH₃ with the proviso that at least one of R₁, R₂, R₃, R₄ denotes Br, and where R₅ denotes an aryl, alkylaryl or alkyl radicals, and n is 1-100.

5. The flame-retardant, optically clear thermoplastic molding composition according to Claim 1, wherein said bromine-substituted oligocarbonate conforms structurally to formula (IVa), 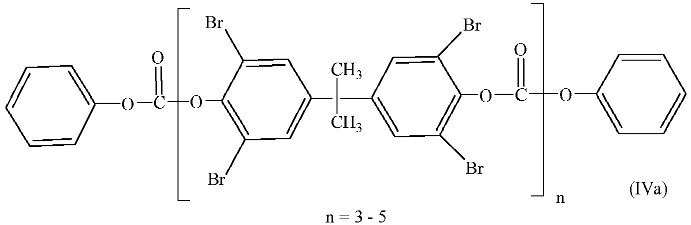 and having a bromine content greater than 40 percent relative to its weight.

6. The flame-retardant, optically clear thermoplastic molding composition according to Claim 1, wherein the phosphorus-containing compound is present in an amount of t 3 pbw to 10 pbw.

7. The flame-retardant, optically clear thermoplastic molding composition according to Claim 1, wherein the phosphorus-containing compound conforms structurally to formula (VII),

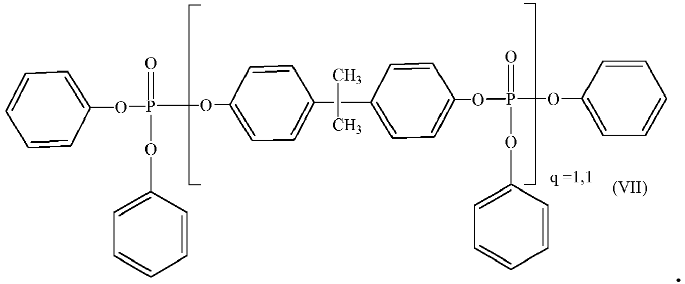

8. The flame-retardant, optically clear thermoplastic molding composition according to Claim 1, wherein the at least one alkali or alkaline-earth salt of perfluoroalkane sulfonic acid is present in an amount of 0.02 pbw to 0.5 pbw.

9. The flame-retardant, optically clear thermoplastic molding composition according to Claim 1, wherein the salt of perfluoroalkane sulfonic acid is a perfluoroalkane sulfonate salt of at least one member selected from the group consisting of alkali metal, alkaline earth metal, C₁₋₆-alkylammonium, and ammonium.

10. The flame-retardant, optically clear thermoplastic molding composition according to Claim 1, wherein the salt is at least one member selected from the group consisting of sodium perfluoromethylbutane sulphonate , potassium perfluoromethylbutane sulphonate, tetraethyl ammonium perfluoromethylbutane sulphonate; sodium perfluoromethane sulphonate, potassium perfluoromethane sulphonate, tetraethyl ammonium perfluoromethane sulphonate; sodium perfluoroethane sulphonate, potassium perfluoroethane sulphonate, tetraethyl ammonium perfluoroethane sulphonate; sodium perfluoropropane sulphonate, potassium perfluoropropane sulphonate, tetraethyl ammonium perfluoropropane sulphonate; sodium perfluorohexane sulphonate, potassium perfluorohexane sulphonate, tetraethyl ammonium perfluorohexane sulphonate; sodium perfluoroheptane sulphonate, potassium perfluoroheptane sulphonate, tetraethyl ammonium perfluoroheptane sulphonate; sodium perfluoroctanesulphonate, potassium perfluoroctanesulphonate, tetraethyl ammonium perfluoroctanesulphonate; sodium perfluorobutane sulfonate, potassium perfluorobutane sulfonate, tetraethyl ammonium perfluorobutane sulfonate, sodium diphenylsulfone-sulphonate, potassium diphenylsulfone-sulphonate, and tetraethyl ammonium diphenylsulfone-sulphonate.

11. The flame-retardant, optically clear thermoplastic molding composition according to Claim 1, wherein the phosphite stabilizer is present in an amount of 0.02 to 0.5 pbw.

12. The flame-retardant, optically clear thermoplastic molding composition according to Claim 1, wherein the phosphite stabilizer is Bis (2,4-dicumylphenyl) pentaerythritol diphosphite.

13. A process for the production of flame-retardant, optically clear thermoplastic molding composition comprising reacting:
A) 60 to 97 pbw of an aromatic polycarbonate;
B) 1 to 20 pbw of bromine-substituted oligocarbonate;
C) 1 to 20 pbw of a phosphorus-containing compound wherein the phosphorus-containing compound conforms structurally to formula (V), 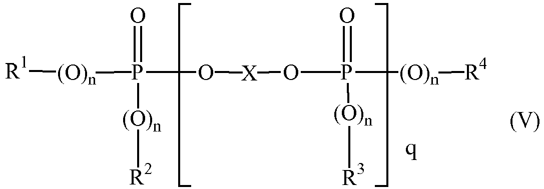 wherein
R¹, R², R³ and R⁴ independently represents C₁-C₈-alkyl, or C₅-C₆-cycloalkyl, C₆-C₂₀-aryl or C₇-C₁₂-aralkyl,
n independently denotes 0 or 1,
q denotes 0.5 to 30, and
X is a mono- or poly-nuclear aromatic radical having from 6 to 30 carbon atoms, or an aliphatic radical having from 2 to 30 carbon atoms;
D) 0.01 to 1 pbw of at least one C₁₋₆-alkylammonium, ammonium, alkali or alkaline-earth salt ofperfluoroalkane sulfonic acid or sodium diphenylsulfone-sulphonate, potassium diphenylsulfone-sulphonate, or tetraethyl ammonium diphenylsulfone-sulphonate; and
E) 0.01 to 1 pbw of a phosphite antioxidant/stabilizer,
wherein the flame-retardant, optically clear thermoplastic molding composition is free of fluorinated polyolefin, shows haze values <1.0% and is rated 5VA at 3.00 mm and V-0 at 1.5 mm according to UL-94.

## Patentansprüche

1. Flammwidrige, optisch klare thermoplastische Formmasse, enthaltend:
A) 60 bis 97 Gewichtsteile eines aromatischen Polycarbonats;
B) 1 bis 20 Gewichtsteile bromsubstituiertes Oligocarbonat;
C) 1 bis 20 Gewichtsteile einer phosphorhaltigen Verbindung, wobei die phosphorhaltige Verbindung strukturell der Formel (V) entspricht, 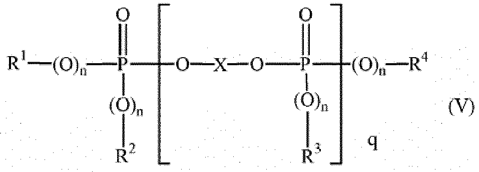 worin
R¹, R², R³ und R⁴ unabhängig voneinander C₁-C₈-Alkyl oder C₅-C₆-Cycloalkyl, C₆-C₂₀-Aryl oder C₇-C₁₂-Aralkyl bedeuten,
n unabhängig voneinander 0 oder 1 bedeutet,
q 0,5 bis 30 bedeutet und
X einen ein- oder mehrkernigen aromatischen Rest mit 6 bis 30 Kohlenstoffatomen oder einen aliphatischen Rest mit 2 bis 30 Kohlenstoffatomen bedeutet;
D) 0,01 bis 1 Gewichtsteile mindestens eines C₁₋₆-Alkylammonium-, Ammonium-, Alkali- oder Erdalkalisalzes einer Perfluoralkansulfonsäure oder Natriumdiphenylsulfonsulfonat, Kaliumdiphenylsulfonsulfonat oder Tetraethylammoniumdiphenylsulfonsulfonat und
E) 0,01 bis 1 Gewichtsteile eines Phosphit-Antioxidans/Stabilisators,
wobei die flammwidrige, optisch klare thermoplastische Formmasse frei von fluoriertem Polyolefin ist, Trübungswerte <1,0% zeigt und gemäß UL-94 die Klassifizierung 5VA bei 3,00 mm und die Klassifizierung V-0 bei 1,5 mm aufweist.

2. Flammwidrige, optisch klare thermoplastische Formmasse nach Anspruch 1, wobei das Polycarbonat in einer Menge von 80 Gewichtsteilen bis 85 Gewichtsteilen vorliegt.

3. Flammwidrige, optisch klare thermoplastische Formmasse nach Anspruch 1, wobei das bromsubstituierte Oligocarbonat in einer Menge von 8 Gewichtsteile bis 12 Gewichtsteile vorliegt.

4. Flammwidrige, optisch klare thermoplastische Formmasse nach Anspruch 1, wobei das bromsubstituierte Oligocarbonat strukturell der Formel (IV) entspricht, 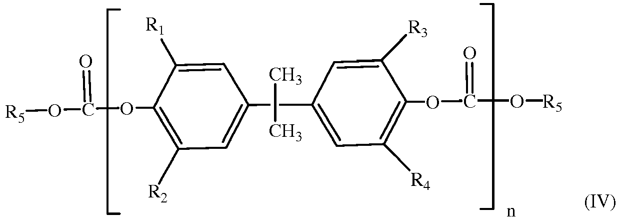 wobei R₁, R₂, R₃ und R₄ unabhängig voneinander für H, Br oder CH₃ stehen, mit der Maßgabe, dass mindestens einer der Reste R₁, R₂, R₃ und R₄ für Br steht, und wobei R₅ für einen Aryl-, Alkylaryl-oder Alkylrest steht und n für 1-100 steht.

5. Flammwidrige, optisch klare thermoplastische Formmasse nach Anspruch 1, wobei das bromsubstituierte Oligocarbonat strukturell der Formel (IVa) entspricht, 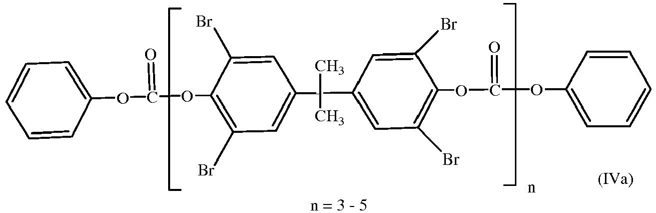 und einen Bromgehalt von mehr als 40 Prozent, bezogen auf sein Gewicht, aufweist.

6. Flammwidrige, optisch klare thermoplastische Formmasse nach Anspruch 1, wobei die phosphorhaltige Verbindung in einer Menge von 3 Gewichtsteilen bis 10 Gewichtsteilen vorliegt.

7. Flammwidrige, optisch klare thermoplastische Formmasse nach Anspruch 1, wobei die phosphorhaltige Verbindung strukturell der Formel (VII) entspricht,

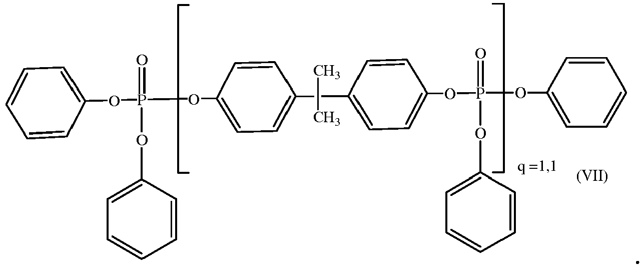

8. Flammwidrige, optisch klare thermoplastische Formmasse nach Anspruch 1, wobei das mindestens eine Alkali- oder Erdalkalisalz einer Perfluoralkansulfonsäure in einer Menge von 0,02 Gewichtsteilen bis 0,5 Gewichtsteilen vorliegt.

9. Flammwidrige, optisch klare thermoplastische Formmasse nach Anspruch 1, wobei es sich bei dem Salz einer Perfluoralkansulfonsäure um ein Perfluoralkansulfonatsalz mindestens eines Mitglieds aus der Gruppe bestehend aus Alkalimetall, Erdalkalimetall, C₁₋₆-Alkylammonium und Ammonium handelt.

10. Flammwidrige, optisch klare thermoplastische Formmasse nach Anspruch 1, wobei es sich bei dem Salz um mindestens ein Mitglied aus der Gruppe bestehend aus Natriumperfluormethylbutansulfonat, Kaliumperfluormethylbutansulfonat, Tetraethylammoniumperfluormethylbutansulfonat; Natriumperfluormethansulfonat, Kaliumperfluormethansulfonat, Tetraethylammoniumperfluormethansulfonat; Natriumperfluorethansulfonat, Kaliumperfluorethansulfonat, Tetraethylammoniumperfluorethansulfonat; Natriumperfluorpropansulfonat, Kaliumperfluorpropansulfonat, Tetraethylammoniumperfluorpropansulfonat; Natriumperfluorhexansulfonat, Kaliumperfluorhexansulfonat, Tetraethylammoniumperfluorhexansulfonat; Natriumperfluorheptansulfonat, Kaliumperfluorheptansulfonat, Tetraethylammoniumperfluorheptansulfonat; Natriumperfluoroctansulfonat, Kaliumperfluoroctansulfonat, Tetraethylammoniumperfluoroctansulfonat; Natriumperfluorbutansulfonat, Kaliumperfluorbutansulfonat, Tetraethylammoniumperfluorbutansulfonat, Natriumdiphenylsulfonsulfonat, Kaliumdiphenylsulfonsulfonat und Tetraethylammoniumdiphenylsulfonsulfonat handelt.

11. Flammwidrige, optisch klare thermoplastische Formmasse nach Anspruch 1, wobei der Phosphit-Stabilisator in einer Menge von 0,02 bis 0,5 Gewichtsteilen vorliegt.

12. Flammwidrige, optisch klare thermoplastische Formmasse nach Anspruch 1, wobei es sich bei dem Phosphit-Stabilisator um Bis(2,4-dicumylphenyl)pentaerythritoldiphosphit handelt.

13. Verfahren zur Herstellung einer flammwidrigen, optisch klaren thermoplastischen Formmasse, bei dem man:
A) 60 bis 97 Gewichtsteile eines aromatischen Polycarbonats;
B) 1 bis 20 Gewichtsteile bromsubstituiertes Oligocarbonat;
C) 1 bis 20 Gewichtsteile einer phosphorhaltigen Verbindung, wobei die phosphorhaltige Verbindung strukturell der Formel (V) entspricht, 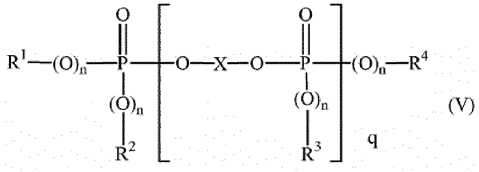 worin
R¹, R², R³ und R⁴ unabhängig voneinander C₁-C₈-Alkyl oder C₅-C₆-Cycloalkyl, C₆-C₂₀-Aryl oder C₇-C₁₂-Aralkyl bedeuten,
n unabhängig voneinander 0 oder 1 bedeutet,
q 0,5 bis 30 bedeutet und
X einen ein- oder mehrkernigen aromatischen Rest mit 6 bis 30 Kohlenstoffatomen oder einen aliphatischen Rest mit 2 bis 30 Kohlenstoffatomen bedeutet;
D) 0,01 bis 1 Gewichtsteile mindestens eines C₁₋₆-Alkylammonium-, Ammonium-, Alkali- oder Erdalkalisalzes einer Perfluoralkansulfonsäure oder Natriumdiphenylsulfonsulfonat, Kaliumdiphenylsulfonsulfonat oder Tetraethylammoniumdiphenylsulfonsulfonat und
E) 0,01 bis 1 Gewichtsteile eines Phosphit-Antioxidans/Stabilisators
umsetzt, wobei die flammwidrige, optisch klare thermoplastische Formmasse frei von fluoriertem Polyolefin ist, Trübungswerte <1,0% zeigt und gemäß UL-94 die Klassifizierung 5VA bei 3,00 mm und die Klassifizierung V-0 bei 1,5 mm aufweist.

## Revendications

1. Composition de moulage thermoplastique ignifuge, optiquement transparente, comprenant :
A) 60 à 97 parties en poids d'un polycarbonate aromatique ;
B) 1 à 20 parties en poids d'un oligocarbonate bromosubstitué ;
C) 1 à 20 parties en poids d'un composé contenant du phosphore ; le composé contenant du phosphore répondant structuralement à la formule (V), 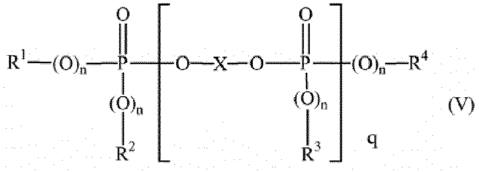 dans laquelle
R¹, R², R³ et R⁴ représentent indépendamment un groupe alkyle en C₁-C₈, ou cycloalkyle en C₅-C₆, aryle en C₆-C₂₀ ou aralkyle en C₇-C₁₂,
n désigne indépendamment 0 ou 1,
q vaut 0,5 à 30, et
X est un radical aromatique mono- ou polynucléaire ayant de 6 à 30 atomes de carbone, ou un radical aliphatique ayant de 2 à 30 atomes de carbone ;
D) 0,01 à 1 partie en poids d'au moins un sel d'alkylammonium en C₁₋₆, d'ammonium, alcalin ou alcalino-terreux
d'acide perfluoroalcanesulfonique ou de diphénylsulfone-sulfonate de sodium, diphénylsulfonesulfonate de potassium, ou diphénylsulfone-sulfonate de tétraéthylammonium ; et
E) 0,01 à 1 partie en poids d'un antioxydant/ stabilisant à base de phosphite,
la composition de moulage thermoplastique ignifuge, optiquement transparente étant dépourvue de polyoléfine fluorée, présentant des valeurs de trouble < 1,0 % et étant classée 5VA à 3,00 mm et V-0 à 1,5 mm selon la norme UL-94.

2. Composition de moulage thermoplastique ignifuge, optiquement transparente selon la revendication 1, dans laquelle le polycarbonate est présent dans une quantité de 80 parties en poids à 85 parties en poids.

3. Composition de moulage thermoplastique ignifuge, optiquement transparente selon la revendication 1, dans laquelle l'oligocarbonate bromosubstitué est présent dans une quantité de 8 parties en poids à 12 parties en poids.

4. Composition de moulage thermoplastique ignifuge, optiquement transparente selon la revendication 1, dans laquelle ledit oligocarbonate bromosubstitué répond structuralement à la formule (IV), 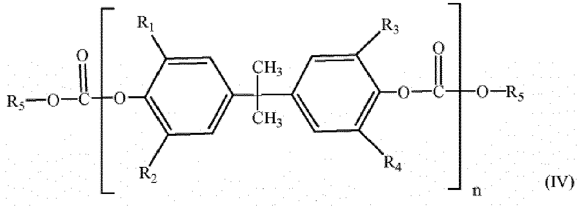 où R₁, R₂, R₃ et R₄ représentent indépendamment H, Br ou CH₃, à condition qu'au moins un de R₁, R₂, R₃ et R₄ représente Br, et où R₅ représente un radical aryle, alkylaryle ou alkyle, et n vaut 1-100.

5. Composition de moulage thermoplastique ignifuge, optiquement transparente selon la revendication 1, dans laquelle ledit oligocarbonate bromosubstitué répond structuralement à la formule (IVa), 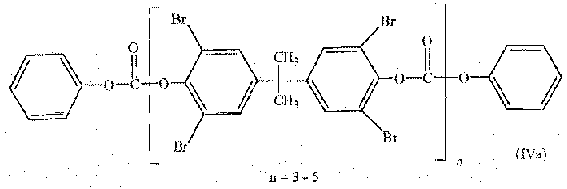 et a une teneur en brome supérieure à 40 pour cent de son poids.

6. Composition de moulage thermoplastique ignifuge, optiquement transparente selon la revendication 1, dans laquelle le composé contenant du phosphore est présent dans une quantité de 3 parties en poids à 10 parties en poids.

7. Composition de moulage thermoplastique ignifuge, optiquement transparente selon la revendication 1, dans laquelle le composé contenant du phosphore répond structuralement à la formule (VII),

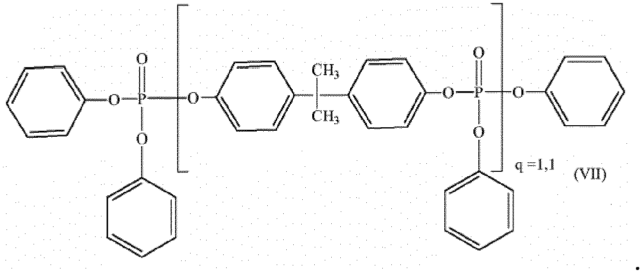

8. Composition de moulage thermoplastique ignifuge, optiquement transparente selon la revendication 1, dans laquelle l'au moins un sel alcalin ou alcalino-terreux d'acide perfluoroalcanesulfonique est présent dans une quantité de 0,02 partie en poids à 0,5 partie en poids.

9. Composition de moulage thermoplastique ignifuge, optiquement transparente selon la revendication 1, dans laquelle le sel d'acide perfluoroalcanesulfonique est un sel de perfluoroalcanesulfonate d'au moins un élément choisi dans le groupe constitué par un métal alcalin, un métal alcalino-terreux, un alkylammonium en C₁₋₆, et l'ammonium.

10. Composition de moulage thermoplastique ignifuge, optiquement transparente selon la revendication 1, dans laquelle le sel est au moins un élément choisi dans le groupe constitué par le perfluorométhylbutanesulfonate de sodium, le perfluorométhylbutanesulfonate de potassium, le perfluorométhylbutanesulfonate de tétraéthylammonium ; le perfluorométhanesulfonate de sodium, le perfluorométhanesulfonate de potassium, le perfluorométhanesulfonate de tétraéthylammonium; le perfluoroéthanesulfonate de sodium, le perfluoroéthanesulfonate de potassium, le perfluoroéthanesulfonate de tétraéthylammonium ; le perfluoropropanesulfonate de sodium, le perfluoropropanesulfonate de potassium, le perfluoropropanesulfonate de tétraéthylammonium ; le perfluorohexanesulfonate de sodium, le perfluorohexanesulfonate de potassium, le perfluorohexanesulfonate de tétraéthylammonium ; le perfluoroheptanesulfonate de sodium, le perfluoroheptanesulfonate de potassium, le perfluoroheptanesulfonate de tétraéthylammonium ; le perfluorooctanesulfonate de sodium, le perfluorooctanesulfonate de potassium, le perfluorooctanesulfonate de tétraéthylammonium ; le perfluorobutanesulfonate de sodium, le perfluorobutanesulfonate de potassium, le perfluorobutanesulfonate de tétraéthylammonium, le diphénylsulfone-sulfonate de sodium, le diphénylsulfone-sulfonate de potassium, et le diphénylsulfone-sulfonate de tétraéthylammonium.

11. Composition de moulage thermoplastique ignifuge, optiquement transparente selon la revendication 1, dans laquelle le stabilisant à base de phosphite est présent dans une quantité de 0,02 à 0,5 partie en poids.

12. Composition de moulage thermoplastique ignifuge, optiquement transparente selon la revendication 1, dans laquelle le stabilisant à base de phosphite est le diphosphite de bis(2,4-dicumylphényl)pentaérythritol.

13. Procédé de production d'une composition de moulage thermoplastique ignifuge, optiquement transparente, comprenant la réaction de :
A) 60 à 97 parties en poids d'un polycarbonate aromatique ;
B) 1 à 20 parties en poids d'un oligocarbonate bromosubstitué ;
C) 1 à 20 parties en poids d'un composé contenant du phosphore, le composé contenant du phosphore répondant structuralement à la formule (V), 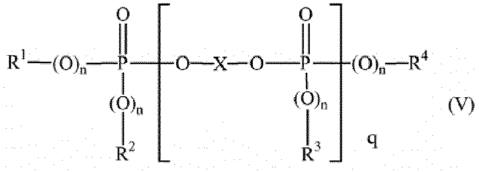 dans laquelle
R¹, R², R³ et R⁴ représentent indépendamment un groupe alkyle en C₁-C₈, ou cycloalkyle en C₅-C₆, aryle en C₆-C₂₀ ou aralkyle en C₇-C₁₂,
n désigne indépendamment 0 ou 1,
q vaut 0,5 à 30, et
X est un radical aromatique mono- ou polynucléaire ayant de 6 à 30 atomes de carbone, ou un radical aliphatique ayant de 2 à 30 atomes de carbone ;
D) 0,01 à 1 partie en poids d'au moins un sel d'alkylammonium en C₁₋₆, d'ammonium, alcalin ou alcalino-terreux
d'acide perfluoroalcanesulfonique ou de diphénylsulfone-sulfonate de sodium, diphénylsulfonesulfonate de potassium, ou diphénylsulfone-sulfonate de tétraéthylammonium ; et
E) 0,01 à 1 partie en poids d'un antioxydant/ stabilisant à base de phosphite,
la composition de moulage thermoplastique ignifuge, optiquement transparente étant dépourvue de polyoléfine fluorée, présentant des valeurs de trouble < 1,0 % et étant classée 5VA à 3,00 mm et V-0 à 1,5 mm selon la norme UL-94.
